# EUROPÄISCHE PATENTANMELDUNG

(11) **EP 0 852 418 A1**
(43) Veröffentlichungstag der Anmeldung: **08.07.1998**
(21) Anmeldenummer: 97100098.9
(22) Anmeldetag: 07.01.1997
(51) Int. Cl.: H02G 3/00, H02G 3/18

(54) **Vorrichtung zum Befestigen von installationsgeräten in einer Unterputzdose**

(71) Anmelder: Golos, Selvin, 65474 Bischofsheim (DE); Yilmaz, Engin, 65474 Bischofsheim (DE); Sözen, Güngör, 65474 Bischofsheim (DE)
(72) Erfinder: Golos, Selvin, 65474 Bischofsheim (DE); Yilmaz, Engin, 65474 Bischofsheim (DE); Sözen, Güngör, 65474 Bischofsheim (DE)
(74) Vertreter: Kodron, Rudolf S., Dipl.-Ing.

(57) **Zusammenfassung**

Es wird angestrebt, bei einer Vorrichtung zum Befestigen von Installationsgeräten in einer Unterputzdose, an der ein das Installationsgerät tragendes ringscheibenförmiges Tragorgan befestigt ist und in welcher auf gegenüberliegenden Seiten des Installationsgeräts zwei U-förmige, aus einer Blattfeder gebogene Federspreizen angeordnet sind, die mit ihrem einen als Stützschenkel ausgebildeten U-Schenkel am Installationsgerät festgelegt sind und mit ihrem anderen als federnde Rastschenkel ausgebildeten U-Schenkel mit Krallen in Innenrillen der Unterputzdose einrasten, die Nachteile zu beseitigen, daß einerseits die Stützschenkel am ringscheibenförmigen Tragorgan und an dem Intstallationsgerät befestigt werden müssen und andererseits, daß die Rastschenkel gesonderte Durchbrechungen in dem ringscheibengförmigen Tragorgan erfordern, die sie durchgreifen.

Erreicht wird dies dadurch, daß die U-förmig gebogenen Federspreizen als Armfortsätze des ringscheibenförmigen Tragorgans und die Rastschenkel zweifach in entgegengesetzte Richtungen abgebogen und die Stützschenkel durchgreifend ausgebildet sind.

## Beschreibung

Die Erfindung betrifft eine Vorrichtung zum Befestigen von Installationsgeräten in einer Unterputzdose, an der ein das Installationsgerät tragendes ringscheibenförmiges Tragorgan befestigt ist und in welcher auf gegenüberliegenden Seiten des Installationsgeräts zwei U-förmige, aus einer Blattfeder gebogene Federspreizen angeordnet sind, die mit ihrem einen als Stützschenkel ausgebildeten U-Schenkel am Installationsgerät festgelegt sind und mit ihrem anderen als federnde Rastschenkel ausgebildeten U-Schenkel mit Krallen in Innenrillen der Unterputzdose einrasten.

Durch das DE-GM 1 946 370 ist eine Vorrichtung der eingangs erwähnten Art bekanntgeworden, die Jedoch die Nachteile hat, daß einerseits die Stützschenkel am ringscheibenförmigen Tragorgan und an dem Installationsgerät befestigt werden müssen und andererseits, daß die Rastschenkel gesonderte Durchbrechungen in dem ringscheibenförmigen Tragorgan erfordern, die sie durchgreifen.

Der Erfindung liegt die Aufgabe zugrunde, eine dem gleichen Zweck dienende schraubenlose Vorrichtung zu schaffen, welche die genannten Nachteile nicht aufweist und darüberhinaus eine einfachere Bauform mit weniger losen Einzelteilen hat.

Gelöst wird diese Aufgabe nach der Erfindung dadurch, daß die U-förmig gebogenen Federspreizen als Armfortsätze des ringscheibenförmigen Tragorgans und die Rastschenkel zweifach in entgegengesetzte Richtungen abgebogen und die Stützschenkel durchgreifend ausgebildet sind.

Zweckmäßigerweise sind die Stützschenkel mittels Klippverschlüssen mit dem Installationsgerät verbunden.

Nachfolgend wird anhand der Zeichnung eine Ausführungsform der Erfindung -etwa in natürlicher Größe dargestellt- näher erläutert und beschrieben.

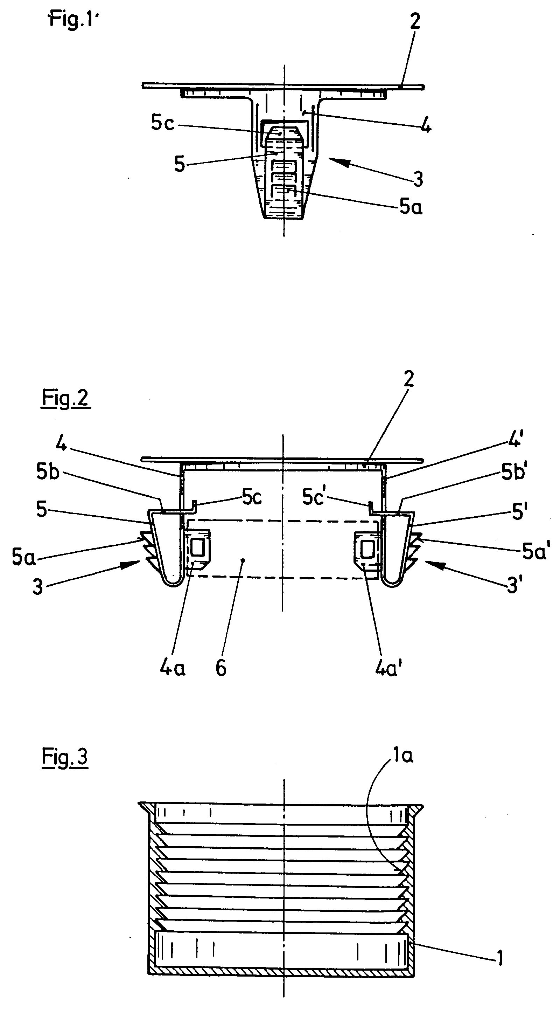

Es zeigen
- Figur 1 und 2: Zwei unterschiedliche Seitenansichten des ringscheibenförmigen Tragorgans und
- Figur 3: die Unterputzdose im Querschnitt.

In der Zeichnung ist die Abdeckhaube nicht und das Installationsgerät 6, das in unterschiedlicher Weise ausgestaltet sein kann, nur gestrichelt dargestellt.

Das ringscheibenförmige Tragorgan 2 wird zusammen mit seinen Armfortsätzen 3,3, welche als U-förmig gebogene Federspreizen ausgebildet sind, beim Zusammenbau in die Unterputzdose 1 eingesetzt, die auf der Innenseite mit Innenrillen 1a versehen ist.

Beim Einschieben des Tragorgans 2 mit den Federspreizen 3,3 in die Unterputzdose 1 werden diese gegeneinander gebogen, so daß sich die Krallen 5a des Rastschenkels 5 in den Innenrillen 1a in der Unterputzdose 1 in der gewünschten Einschubtiefe einfügen und dort arretiert werden.

Die freien Enden der Rastschenkel 5 sind in zwei entgegengesetzten Richtungen abgebogen, so daß sich ein Rastschenkelabschnitt 5b ergibt, welcher den Stützschenkel 4 durchgreift und ein Endabschnitt 5c, der zur Öffnung der Unterputzdose 2 hinweist.

Man kann die Endabschnitte 5c, 5c der beiden Rastschenkel 5,5 von Hand oder mit einem Werkzeug ergreifen und gegeneinanderdrücken, so daß sich auf diese Weise die Krallen 5a aus den Innenrillen 1a der Unterputzdose 1 herausbewegen lassen. Dies ermöglicht den Ausbau des Tragorgans 2 mit dem Installationsgerät 6 aus der Unterputzdose 1.

Die Stützschenkel 4,4 können mit Fortsätzen 4a versehen sein, die Teile des Installationsgeräts 6 umgreifen und in Form eines Klippverschlusses festhalten.

Die beschriebene Vorrichtung hat den Vorteil, daß es keine losen Federspreizen 3,3 gibt, die an einem Tragorgan und einem Installationsgerät zu befestigen sind. Die Federspreizen 3,3 sind vielmehr Bestandteile des ringscheibenförmigen Tragorgans 2.

## Patentansprüche

1. Vorrichtung zum Befestigen von Installationsgeräten in einer Unterputzdose, an der ein das Installationsgerät tragendes ringscheibenförmiges Tragorgan befestigt ist und in welcher auf gegenüberliegenden Seiten des Installationsgeräts zwei U-förmige, aus einer Blattfeder gebogene Federspreizen angeordnet sind, die mit ihrem einen als Stützschenkel ausgebildeten U-Schenkel am Installationsgerät festgelegt sind und mit ihrem anderen als federnde Rastschenkel ausgebildeten U-Schenkel mit Krallen in Innenrillen der Unterputzdose einrasten,
dadurch gekennzeichnet, daß
- die U-förmig gebogenen Federspreizen (3,3) als Armfortsätze des ringscheibenförmigen Tragorgans (2) und
- die Rastschenkel (5,5) zweifach in entgegengesetzte Richtungen abgebogen und die Stützschenkel (4,4) durchgreifend ausgebildet sind.

2. Vorrichtung nach Anspruch 1,
dadurch gekennzeichnet, daß
die Stützschenkel (4,4) mittels Klippverschlüssen (4a, 4a) mit dem Installationsgerät (6) verbunden sind.
